(19) Europäisches Patentamt
European Patent Office
Office européen des brevets

(11) **EP 0 395 403 B1**

(12) **EUROPEAN PATENT SPECIFICATION**

(45) Date of publication and mention
of the grant of the patent:
**14.08.1996 Bulletin 1996/33**

(51) Int Cl.6: **G11B 7/09**

(21) Application number: **90304515.1**

(22) Date of filing: **26.04.1990**

(54) **Optical information recording/ reproducing apparatus comprising digital servo device for performing focusing and/or tracking of optical head based on digital information**

Optisches Informationsaufnahme-/-wiedergabegerät mit digitaler Servoeinrichtung zum Fokussieren und/oder zur Spurfolge eines optischen Kopfes, basierend auf digitale Information

Appareil d'enregistrement/de reproduction optique avec dispositif d' asservissement numérique pour la mise au point et/ou le suivi de piste d'une tête optique basé sur l'information numérique.

(84) Designated Contracting States:
**DE FR GB IT NL**

(30) Priority: **28.04.1989 JP 107762/89**
**20.04.1990 JP 103055/90**

(43) Date of publication of application:
**31.10.1990 Bulletin 1990/44**

(73) Proprietor: **CANON KABUSHIKI KAISHA Tokyo (JP)**

(72) Inventor: **Ogino, Tsukasa, c/o Canon K.K., 30-2, 3-chome Tokyo (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
**EP-A- 0 249 462        GB-A- 2 158 611**

● **Japanese Journal of Applied Physics/Supplements vol. 26, no. 26-4, 1987, Tokyo, Japan page 191 KATSUHARA ET AL: "Fine Seek Technique"**

**Description**

BACKGROUND OF THE INVENTION:

Field of the Invention

The present invention relates to an optical information recording/reproducing apparatus for recording and/or reproducing information on and/or from an optical memory medium such as an optical disk or an optical card, using an optical head and, more particularly, to a digital servo device for performing auto-fucus control and auto-tracking control of the optical head in the apparatus of this type.

Related Background Art

Tracks are concentrically or spirally formed on an optical disk, and the optical disk is divided into a plurality of sectors in terms of recording of variable length data or an increase in access speed of an optical head. The optical disk is subjected to optical recording/reproduction in units of sectors.

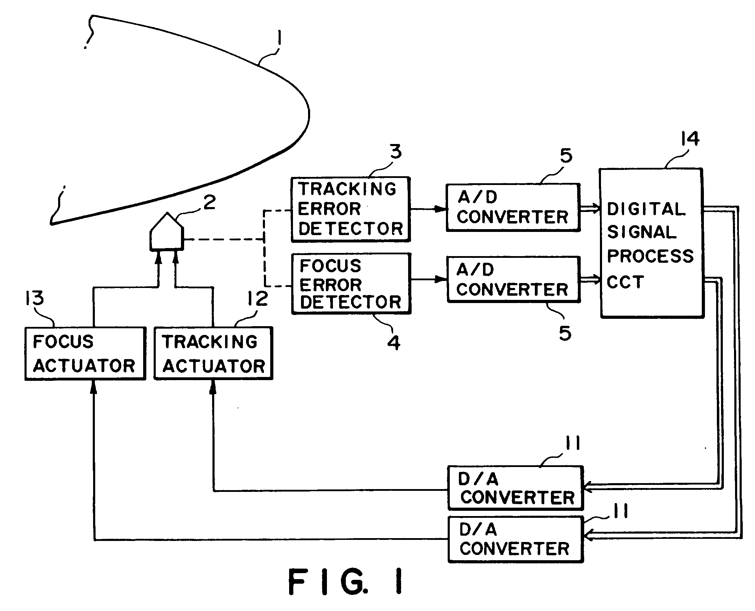

In order to access the optical head to each sector or track, the optical head (mainly, an optical system) must be servo-controlled in so-called focusing and tracking directions. A conventional servo control can be made in an analog or digital manner. In particular, in recent years, digital servo control has received a great deal of attention since it can stably operate a servo system. Fig. 1 shows an example of a digital servo control device.

A digital servo device of a conventional optical information recording/reproducing apparatus will be described below with reference to Fig. 1.

The servo device shown in Fig. 1 includes an optical disk 1 as a recording medium, an optical system 2 for an optical head, a tracking error detector 3 for detecting a tracking error signal based on an output from the optical system 2, and a focus error detector 4 for detecting a focus error signal on the basis of an output from the optical system 2. The tracking error detector 3 and the focus error detector 4 can adopt a known detection method in, e.g., an optical disk recording apparatus. The servo device also includes A/D converters 5 for A/D-converting error signals output from the error detectors 3 and 4 into digital signals, a digital signal process circuit 14, D/A converters 11 for converting the digital signals from the signal process circuit 14 into analog signals, and tracking and focus actuators 12 and 13 for driving the optical head 2 in predetermined directions.

The operation of the digital servo device in the optical information recording/reproducing apparatus with the above arrangement will be described below.

When information is to be recorded on or reproduced from the optical disk 1 by the optical system 2, the optical system 2 must be controlled by the focus and tracking actuators 13 and 12. The digital signal process circuit 14 obtains, using predetermined equations, control amounts necessary for accurately controlling the optical system 2 to a desired position in accordance with tracking and focus error signals output from the optical system 2. The actuators 12 and 13 are operated by the control amounts obtained by the digital signal process circuit 14.

Japanese Patent Laid-Open No. 63-121136 discloses the same arrangement as the conventional digital servo device described above. This prior art invention also discloses that control parameters (coefficients) corresponding to various conditions (in focusing and tracking modes) and prestored in a memory are read out, as needed, and calculations are performed using the readout parameters so that the frequency characteristics of a servo system optimally and at all times matches with actuators.

However, in the conventional digital servo device described above, a basic control process (equations) is permanently set (programmed) in the digital signal process circuit. (In the arrangement disclosed in Japanese Patent Laid-Open No. 63-121136, the basic control processes, i.e., equations are permanently set in a DSP 38. Only coefficients of the equations can be changed according to conditions. For example, in an equation $y = a_n x^2 + b_n x + c_n$, only coefficient portions $a_n$, $b_n$, and $c_n$ can be changed.) More specifically, one control process is caused to have redundancy in correspondence with all possible conditions. When an optical disk having different characteristics of a reflectance is used, or when an optical disk having a different track interval or sector format is used, the digital signal process circuit shown in Fig. 1 must use different control processes, and the actuators cannot be properly controlled. It is impossible to cope with various conditions by only changing coefficients of equations.

Some host machines (not shown) for controlling an optical disk device have different minimum recording lengths of optical disks. In order to achieve optimal tracking, a control process used in the digital signal process circuit 14 shown in Fig. 1 must be changed. As described above, however, since the control process cannot be changed, the actuators cannot be properly controlled.

The control process is left unchanged between a case wherein focusing and/or tracking servo is led in (or set up) before an operation is started (transient operation) and a case wherein a servo loop is closed after the servo is led in (steady operation) although these operation states require different control processes. As a result, optimal servo control cannot be performed in these operation states.

Furthermore, if the same control process is employed in both the focusing and tracking servo operations, optimal servo control is disturbed in these operations.

In EP-A-0249642 there is disclosed a recording disc reproducing apparatus including focusing and tracking servo loops. The servo loops include tracking and focusing actuators for moving at least part of the optical system in order to adjust tracking and focusing of the light beam on the recording medium. A/D conversion means, processing means and D/A conversion means are included in the two servo loops. The A/D conversion circuitry has an input/output characteristic which varies in accordance with the error signal level enabling a reduction in the number of A/D output bits which are necessary.

## SUMMARY OF THE INVENTION

The present invention has been made in consideration of the above situation, and has as its object to provide a digital servo device in an optical information recording/reproducing apparatus which can execute an optimal control process corresponding to an operation environment and a type of optical memory medium such as an optical disk, and has high versatility.

In order to achieve the above object, there is provided an optical information recording and/or reproducing apparatus comprising: an optical system for radiating a light beam onto a desired track on an optical information recording medium; tracking error and/or focusing error detection means for detecting tracking and/or focusing errors of the light beam relative to said track and for outputting analog signals corresponding to said tracking and/or focusing errors; a tracking and/or focusing actuator for moving at least a part of said optical system in order to adjust tracking and/or focusing of said light beam relative to said recording medium; A/D conversion means for converting the analog signal output from said tracking error and/or focusing error detection means into digital signals; processing means for processing the digital signal converted by said A/D conversion means on the basis of a predetermined processing equation so as to calculate a control amount for said tracking and/or focusing actuator in order to correct said tracking and/or focusing errors; D/A conversion means for converting the digital signal corresponding to said control amount output from said processing means, into a analog signal; and driving means for driving said tracking and/or focusing actuator on the basis of the analog signal converted by said D/A conversion means, characterized in that said apparatus comprises memory means for storing a plurality of processing equations of different degrees, and said memory means being arranged to change the processing equation used in said processing means to the processing equation stored in said memory means of different degree from that of the processing equation used in said processing means according to the use of the apparatus.

The above and other objects and features of the present invention will be apparent from the description of the preferred embodiments.

## BRIEF DESCRIPTION OF THE DRAWINGS:

Fig. 1 is a schematic block diagram showing a conventional digital servo device;

Fig. 2 is a schematic block diagram of a digital servo device according to the first embodiment of the present invention;

Fig. 3 is a schematic diagram for explaining a control process stored in a memory shown in Fig. 2;

Fig. 4 is a flow chart showing the operation of the embodiment shown in Fig. 2; and

Fig. 5 is a flow chart showing an operation of a digital servo device according to the second embodiment of the present invention.

## DETAILED DESCRIPTION OF THE PREFERRED EMBODIMENTS:

An embodiment of a digital servo device according to the present invention will be described in detail below with reference to the accompanying drawings.

As an embodiment of the digital servo device of the present invention, a digital servo device using an optical disk medium will be exemplified.

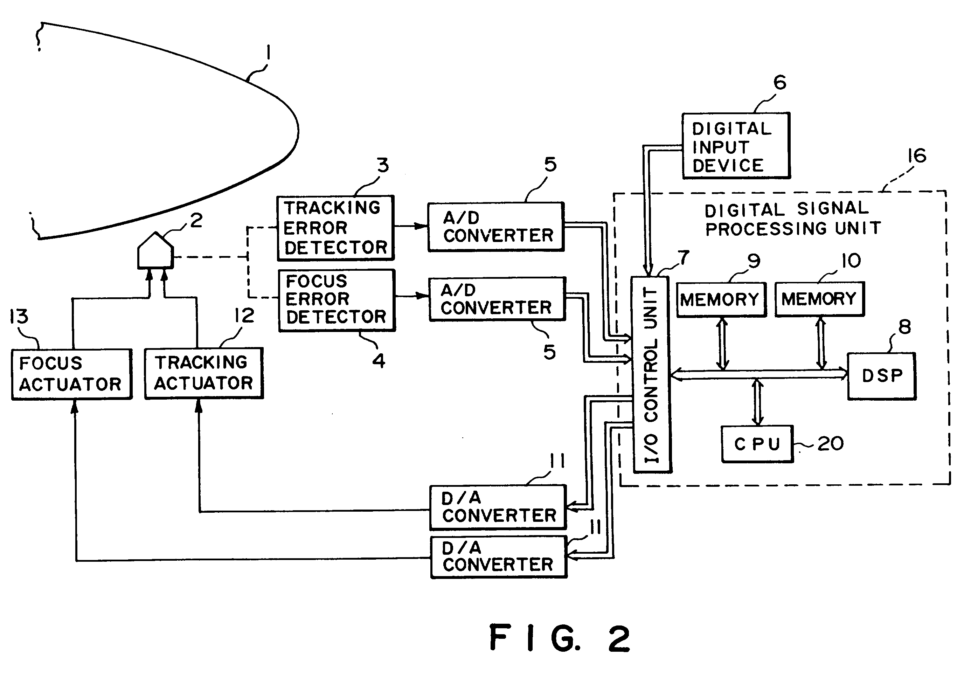

Fig. 2 is a schematic block diagram showing an arrangement of the digital servo device.

The digital servo device shown in Fig. 2 includes a digital signal processing unit 16, an input/output control unit (to be referred to as an I/O control unit hereinafter) 7, a digital signal processor (to be abbreviated to as a DSP hereinafter) 8, memories 9 and 10, an external data input device 6, and a CPU 20 for systematically controlling the digital signal processing unit 16. Note that an optical system 2, a tracking actuator 12, a focus actuator 13, a tracking error detector 3, a focus error detector 4, A/D converters 5, and D/A converters 11 are the same as those in the conventional device.

The external data input device 6 is used to externally input a control process, and comprises, e.g., a disk drive device, or a ROM. The memories 9 and 10 serve as means for storing the input control process. The DSP 8 processes only calculations when control amounts of the actuators 12 and 13 are calculated based on the outputs from the A/D converters 5. For example, the DSP 8 is used to perform predetermined calculations in accordance with the control processes (equations) stored in the memories 9 and 10. The I/O control unit 7 controls data input of the data input device 6, digital inputs of the A/D converters, 5, and input/output of calculated digital outputs under the control of the CPU 20.

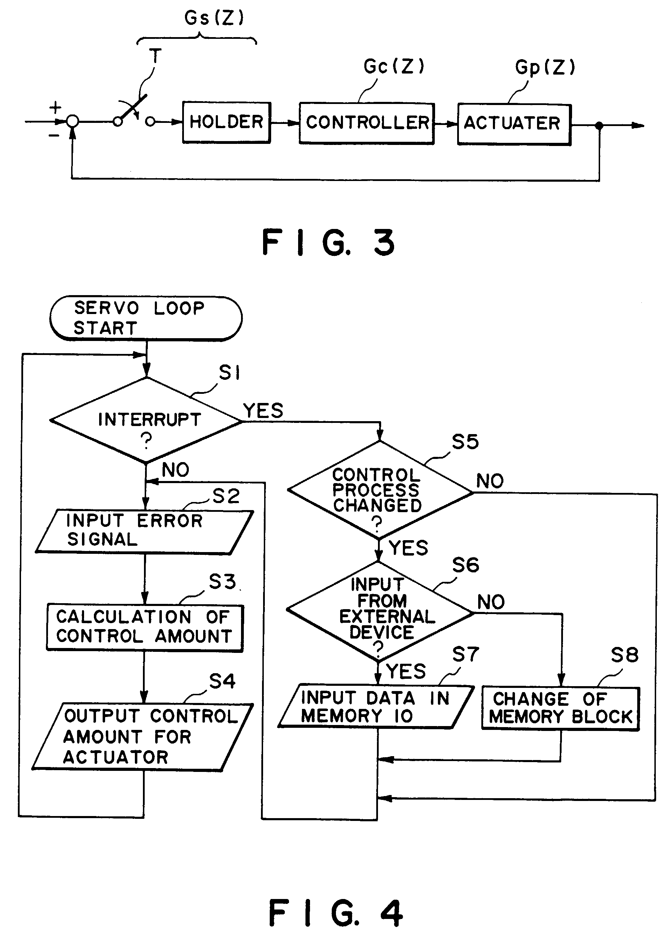

An example of the control process stored in the memory will be briefly described below with reference to Fig. 3.

Fig. 3 is a block diagram of a tracking servo loop of the digital servo device. A sampler and a holder Gs(Z) correspond to the A/D converter 5 shown in Fig. 2, and Gp(Z) corresponds to the tracking actuator 12 shown in Fig. 2.

In order to obtain desired servo characteristics (frequency characteristics, and the like), Gc(Z) is designed. In this process, when Gc(Z) is calculated by the DSP, programs for calculations are allocated in the memories 9 and 10 shown in Fig. 2.

For example, the memory 9 stores a quadratic equation given by:

$$Gc2(Z) = (b_0 + b_1 Z^{-1} + b_2 Z^{-2})/$$

$$(a_0 + a_1 Z^{-1} + a_2 Z^{-2}) \qquad (1)$$

The memory 10 stores a cubic equation given by:

$$Gc3(Z) = (b_0 + b_1 Z^{-2} + b_2 Z^{-2} + b_3 Z^{-3})/$$

$$(a_0 + a_1 Z^{-2} + a_2 Z^{-2} + a_3 Z^{-3}) \qquad (2)$$

In this case, parameters $a_n$ and $b_n$ are different from each other.

Therefore, loop transfer characteristics shown in Fig. 3 are expressed in two ways as follows:

$$G(Z) = Gs(Z) \cdot Gc2(Z) \cdot Gp(Z) \qquad (3)$$

$$G(Z) = Gs(Z) \cdot Gc3(Z) \cdot Gp(Z) \qquad (4)$$

Thus, the program stored in one of the memories 9 and 10 is selected, thereby selecting optimal tracking servo characteristics for the operation environment.

In this embodiment, quadratic and cubic controllers are exemplified. However, various controllers having other numbers of order may be prepared.

The operation of the digital servo device for an optical disk with the above arrangement will be described below.

Fig. 4 is a flow chart of the operation in the servo loop mode.

The operation of the servo device in a reproduction mode will be described below with reference to Figs. 2 and 4. A light beam is radiated onto the optical disk 1 through the optical system 2. A light beam reflected by the optical disk 1 is incident on the optical system 2, and a tracking error signal is detected from the incident light beam by the tracking error detector 3. A focus error signal is detected from the incident light beam by the focus error detector 4. The tracking and focus error signals are respectively converted to digital signals by the A/D converters 5, and the digital signals are input the DSP 8 through the I/O control unit 7 (step S2). The DSP 8 calculates control amounts according to the control process stored in the memory 9 (step S3). The calculation result is output to the D/A converters 11 through the I/O control unit 7 (step S4). Each control amount converted to an analog amount by the D/A converter 11 is input to the tracking actuator 12 or the focus actuator 13, thereby performing tracking or focusing servo. The basic servo control flow has been described above.

When an operation environment is varied like in a case wherein an optical disk medium having different characteristics is used, the servo loop is interrupted by a predetermined external interrupt means (step S1). As the external interrupt means, a switch arranged on the device may be depressed by a user himself according to a type of recording medium, or a signal representing a required control process may be recorded in advance on a recording medium itself, so that the signal is read by a recording and/or reproducing light beam, and an interrupt instruction is generated according to the read value.

When the servo loop is interrupted (YES in step S1), it is checked if the control process is to be changed (step S5). When the servo control process is to be changed (YES in step S5), the I/O operation of the I/O control unit 7 by the DSP 8 is stopped. It is checked if an external input is made by the data input device (step S6). This input is to check if the control process to be subjected to processing has already been registered in the memory. If the control process has already been registered, the control process registered in the memory 10 is selected to change a memory block to be used (step S8). If no control process is registered, a message indicating this is displayed for a user, and data of the control process is input from the external data input device 6 to the memory 10 through the I/O control unit 7, thereby creating a new memory block, and making control based on the new memory block (step S7).

In this embodiment, the digital signal process unit 16 has two blocks of memories. More memory blocks may be arranged so that various control processes can be selected. In this case, the effect of the present invention can be sufficiently provided.

The external data input device 6 is omitted, and a plurality of control processes to be used may be stored in a plurality of memories (ROMs).

The series of operations described above are managed by the CPU 20.

The second embodiment of the present invention will be described below.

In the second embodiment, a flow of an operation for changing a control process between a case wherein focusing and/or tracking servo is set up before a focusing and/or tracking servo operation is started (transient operation) and a case wherein a servo loop is closed after the servo is set up (steady operation) will be described below. The flow of the operation for, e.g., focusing servo will be described below with reference to Figs. 1, 2, and 3. The CPU 20 selects a memory which stores an equation for setting up focusing servo on the basis of a recording and/or reproducing operation start instruction from a host computer (not shown). In this case, the memory 9 is assumed to a memory to be selected.

In the setup mode, the DSP 8 is operated according to the content of the memory 9. When the setup operation is completed, the servo loop is interrupted based on a signal indicating completion of the setup operation (YES in step S1). It is checked if a control process is to be changed (step S5). In this case, since an operation state is changed from the transient operation to the steady operation, the control process is changed (YES in step S5). It is checked if there is an external input (step S6). If no control process for the steady operation is registered in the memory 9 or 10, the CPU 20 signals a message indicating this to an external user, and an external input is made (step S7). A desired control process is then selected (step S7 or S8), and desired control is started.

In this embodiment, equation (1) described above is used in the transient operation mode, and equation (2) described above is used in the steady operation mode. A difference between equations (1) and (2) is as follows. That is, equation (1) is a quadratic equation for high-frequency characteristics with a high gain, and can provide a good transient response. Equation (2) is a cubic equation obtained by multiplying a linear equation for compensating for a gain of only a low-frequency range with a quadratic equation with a lower gain than that of equation (1), and has better steady characteristics than the transient response.

The third embodiment of the present invention will be described below.

When a digital signal processing unit is commonly used by focusing and tracking servo loops like in Fig. 1 (although this device has lower cost), tracking servo and focusing servo cannot be simultaneously operated. Therefore, focusing servo and tracking servo are time-divisionally controlled. In this case, the control process of the DSP 8 is changed when focusing servo control and tracking servo control are switched.

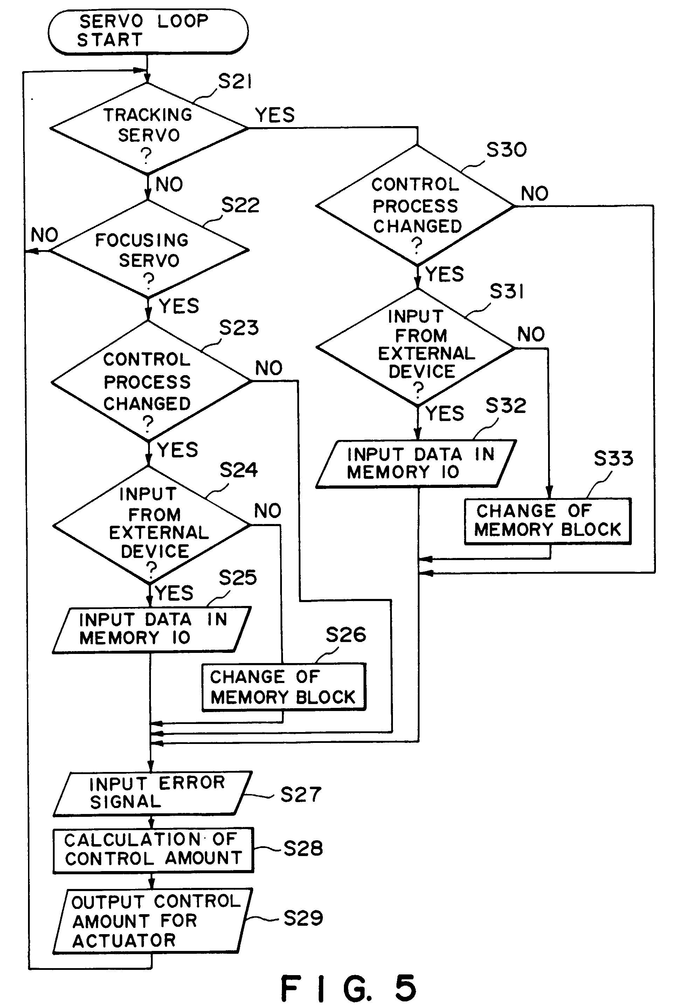

The flow of the operation will be described below with reference to Figs. 1, 2, and 5.

The focusing servo loop has already been operated in accordance with the content of the memory 9 storing a desired equation.

Assume that a host computer (not shown) issues a tracking servo operation instruction. The CPU 20 controls the I/O control unit to operate tracking servo (YES in step S21). It is checked if a control process must be changed (step S30). If YES in step S30, it is checked if there is an external input (step S31). If there is an external input, the external input is stored in the memory 10 (step S32). The memory 10 storing the desired control process is then selected (step S32 or S33).

The DSP 8 performs calculations based on the equation stored in the memory 10, and a predetermined operation is performed (steps S27 to S29). In the third embodiment, since the focusing and tracking servo loops are time-divisionally controlled, the next operation jumps to step S22 and subsequent steps. The following operation is performed in the same manner as in the operation of the tracking servo loop.

In the third embodiment, equations of the focusing and tracking servo loops are not particularly limited.

## Claims

1. An optical information apparatus for recording information on an optical information recording medium, or an optical information reproducing apparatus for reproducing information recorded on an optical information recording medium, or an optical information recording and reproducing apparatus for recording information on and reproducing information from an optical information recording medium, comprising:

   an optical system (2) for radiating a light beam onto a desired track on the optical information recording medium (1);

tracking error (3) and/or focusing error (4) detection means for detecting tracking and/or focusing errors of the light beam relative to said track and for outputting analog signals corresponding to said tracking and/or focusing errors;

a tracking and/or focusing actuator (12, 13) for moving at least a part of said optical system (2) in order to adjust tracking and/or focusing of said light beam relative to said recording medium (1);

A/D conversion means (5) for converting the analog signal output from said tracking error and/or focusing error detection means (3, 4) into digital signals;

processing means (8) for processing the digital signal converted by said A/D conversion means (5) on the basis of a predetermined processing equation so as to calculate a control amount for said tracking and/or focusing actuator (12, 13) in order to correct said tracking and/or focusing errors;

D/A conversion means (11) for converting the digital signal corresponding to said control amount output from said processing means (8), into an analog signal; and

driving means for driving said tracking and/or focusing actuator (12, 13) on the basis of the analog signal converted by said D/A conversion means (11),

characterized in that said apparatus comprises memory means (9,10) for storing a plurality of processing equations of different degrees, and said memory means (9, 10) being arranged to change the processing equation used in said processing means (8) to the processing equation stored in said memory means (9, 10) of different degree from that of the processing equation used in said processing means (8) according to the operating condition of the apparatus.

2. An apparatus according to Claim 1, wherein the processing equations are a quadratic processing equation and a cubic processing equation.

3. An apparatus according to Claim 1, wherein said apparatus further comprises data input means (7) connected to said memory means (9,10), and said memory means (9,10) is capable of rewriting the stored processing equations by use of said data input means (7).

4. An apparatus according to Claim 1, wherein said memory means (9,10) includes a plurality of storing portions each storing different equations.

5. An apparatus according to Claim 1, the change of the processing equations by said processing means (8) is effected upon tracking and focusing.

6. An apparatus according to Claim 1, the change of the processing equations by said processing means (8) is effected when a recording medium (1) having a different reflectance is used.

7. An apparatus according to Claim 1, the change of the processing equations by said processing means (8) is effected upon tracking and/or focusing, and after tracking and/or focusing.

8. A method of optical information recording of information on an optical information recording medium, or a method of optical information reproducing of information recorded on an optical information recording medium, or a method of recording and reproducing information on and from an optical information recording medium, comprising the steps of:

radiating a light beam onto a desired track on an optical information recording medium (1);

detecting tracking and/or focusing errors of the light beam relative to said track and outputting analog signals corresponding to said tracking and/or focusing errors;

adjusting tracking and/or focusing of the light beam relative to said recording medium (1);

converting the analog signal output produced by said detection into digital signals;

processing the converted digital signals on the basis of a predetermined processing equation so as to calculate a control amount in order to correct said tracking and/or focusing errors;

converting the digital signal corresponding to the control amount into an analog signal; and

adjusting said tracking and/or focusing of the light beam relative to said recording medium (1) on the basis of the converted analog signal,

said method being characterized by the further steps of storing a plurality of processing equations of different degrees in memory means (9,10), changing the processing equation used in said processing to the processing equation stored in the memory means of different degree from that used in the processing according to the operating condition of the apparatus.

**Patentansprüche**

1. Optisches Informationsgerät zur Aufnahme von Information auf ein optisches Informationsaufnahmemedium, oder ein optisches Informationswiedergabegerät zur Wiedergabe von auf ein optisches Informationsaufnahmemedium aufgenommenen Informationen, oder ein optisches Informationsaufnahme-/-wiedergabegerät zur Aufnahme von Information auf ein und zur Wiedergabe von Information von einem optischen Informationsaufnahmemedium, mit:

   einem optischen System (2) zum Einstrahlen eines Lichtstrahls auf eine gewünschte Spur auf einem optischen Informationsaufnahmemedium (1);

   einer Spurfolgefehler- (3) und/oder Fokussierfehlerdetektoreinrichtung (4) zur Erfassung von Spurfehlern und/oder Fokussierfehlern des Lichtstrahls relativ zur Spur und zur Ausgabe analoger Signale entsprechend den Spurfehlern und/oder Fokussierfehlern;

   einem Spurfolge- und/oder Fokussierbetätigungsglied (12, 13) zur Bewegung von zumindest einem Teil des optischen Systems (2) zur Anpassung der Spurfolge und/oder Fokussierung des Lichtstrahls relativ zu dem Aufnahmemedium (1);

   einer A/D-Umwandlungseinrichtung (5) zur Umwandlung der von der Spurfolgefehler- und/oder Fokussierfehlerdetektoreinrichtung (3, 4) ausgegebenen analogen Signale in digitale Signale;

   einer Verarbeitungseinrichtung (8) zur Verarbeitung der mittels der A/D-Umwandlungseinrichtung (5) umgewandelten digitalen Signale auf der Basis einer vorbestimmten Verarbeitungsgleichung zur Berechnung einer Steuerungsgröße für das Spurfolge- und/oder Fokussierbetätigungsglied (12, 13) zur Korrektur der Spurfolgeund/oder Fokussierfehler;

   einer D/A-Umwandlungseinrichtung (11) zur Umwandlung der den von der Verarbeitungseinrichtung (8) ausgegebenen Steuerungsgrößen entsprechenden digitalen Signale in analoge Signale; und

   einer Antriebseinrichtung zum Antrieb des Spurfolgeund/oder Fokussierbetätigungsglieds (12, 13) auf der Basis der mittels der D/A-Umwandlungseinrichtung (11) umgewandelten analogen Signale,

   dadurch gekennzeichnet, daß

   das Gerät eine Speichereinrichtung (9, 10) zum Speichern einer Vielzahl von Verarbeitungsgleichungen unterschiedlichen Grades aufweist, und

   die Speichereinrichtung (9, 10) vorgesehen ist zur Änderung der in der Verarbeitungseinrichtung (8) verwendeten Verarbeitungsgleichung in die in der Speichereinrichtung (9, 10) gespeicherte Verarbeitungsgleichung eines unterschiedlichen Grads gegenüber demjenigen der Verarbeitungsgleichung, die in der Verarbeitungseinrichtung (8) entsprechend der Verwendung des Geräts benutzt wird.

2. Gerät nach Anspruch 1, bei dem die Verarbeitungsgleichungen eine quadratische Verarbeitungsgleichung und eine kubische Verarbeitungsgleichung umfassen.

3. Gerät nach Anspruch 1, das ferner eine mit der Speichereinrichtung (9, 10) verbundene Dateneingabeeinrichtung (7) aufweist, wobei die Speichereinrichtung (9, 10) in der Lage ist, die gespeicherten Verarbeitungsgleichungen unter Verwendung der Dateneingabeeinrichtung (7) umzuschreiben.

4. Gerät nach Anspruch 1, bei dem die Speichereinrichtung (9, 10) eine Vielzahl von Speicherbereichen zur jeweiligen Speicherung unterschiedlicher Gleichungen aufweist.

5. Gerät nach Anspruch 1, bei dem die Änderung der Verarbeitungsgleichungen durch die Verarbeitungseinrichtung (8) entsprechend der Spurfolge und Fokussierung vorgenommen wird.

6. Gerät nach Anspruch 1, bei dem die Änderung der Verarbeitungsgleichungen durch die Verarbeitungseinrichtung (8) durchgeführt wird, wenn ein Aufnahmemedium (1) mit unterschiedlichen Reflexionseigenschaften verwendet wird.

**7.** Gerät nach Anspruch 1, bei dem die Änderung der Verarbeitungsgleichungen durch die Verarbeitungseinrichtung (8) entsprechend der Spurfolge und/oder Fokussierung und nach einer Spurfolge und/oder Fokussierung durchgeführt wird.

**8.** Verfahren zur optischen Informationsaufnahme von Informationen auf ein optisches Informationsaufnahmemedium, oder ein Verfahren zur optischen Informationswiedergabe von auf einem optischen Informationsaufnahmemedium aufgenommenen Informationen, oder ein Verfahren zur Aufnahme und Wiedergabe von Informationen auf und von einem optischen Informationsaufnahmemedium, mit den Schritten:

Einstrahlen eines Lichtstrahls auf eine gewünschte Spur auf einem optischen Informationsaufnahmemedium (1);

Ermitteln von Spurfolge- und/oder Fokussierungsfehlern des Lichtstrahls relativ zu der Spur und Ausgeben analoger Signale entsprechend den Spurfolge- und/oder Fokussierungsfehlern;

Anpassen der Spurfolge und/oder Fokussierung des Lichtstrahls relativ zu dem Aufnahmemedium (1);

Umwandeln des im Rahmen der Erfassung ausgegebenen analogen Signals in digitale Signale;

Verarbeiten der umgewandelten digitalen Signale auf der Basis einer vorbestimmten Verarbeitungsgleichung zur Berechnung einer Steuerungsgröße zur Korrektur der Spurfolge- und/oder Fokussierungsfehler;

Umwandeln der den Steuerungsgrößen entsprechenden digitalen Signale in analoge Signale; und

Anpassen der Spurfolge und/oder Fokussierung des Lichtstrahls relativ zu dem Aufnahmemedium (1) auf der Basis des umgewandelten analogen Signals,

gekennzeichnet durch die weiteren Schritte:
Speichern einer Vielzahl von Verarbeitungsgleichungen unterschiedlicher Grade in der Speichereinrichtung (9, 10) und Ändern der bei der Verarbeitung verwendeten Verarbeitungsgleichung in die in der Speichereinrichtung gespeicherte Verarbeitungsgleichung eines unterschiedlichen Grads im Vergleich zu demjenigen, der bei der Verarbeitung entsprechend den Betriebsbedingungen des Geräts verwendet wird.

## Revendications

**1.** Appareil de traitement d'information optique pour l'enregistrement d'information sur un support d'enregistrement d'information optique, ou pour un appareil de reproduction d'information optique destiné à reproduire une information enregistrée sur un support d'enregistrement d'information optique, ou pour un appareil d'enregistrement et de reproduction d'information optique destiné à enregistrer et à reproduire une information sur un, et à partir d'un, support d'enregistrement d'information optique, comprenant:

un système (2) optique pour projeter un faisceau lumineux sur une piste souhaitée du support (1) d'enregistrement d'information optique;
un moyen de détection d'erreur (3) de piste et/ou d'erreur (4) de focalisation pour détecter des erreurs de piste et/ou de focalisation du faisceau lumineux par rapport à ladite piste et pour fournir en sortie des signaux analogiques correspondant auxdites erreurs de piste et/ou de focalisation;
un actionneur (12, 13) de suivi de piste et/ou de focalisation pour déplacer au moins une partie dudit système (2) optique afin d'ajuster le suivi de piste et/ou la focalisation dudit faisceau lumineux par rapport audit support (1) d'enregistrement;
un moyen (5) de conversion A/N pour convertir le signal analogique sortant dudit moyen (3,4) de détection d'erreur de piste et/ou d'erreur de focalisation en des signaux numériques;
un moyen (8) de traitement pour traiter le signal numérique converti par ledit moyen (5) de conversion A/N sur la base d'une équation de traitement prédéterminée de façon à calculer une valeur de commande pour ledit actionneur (12, 13) de suivi de piste et/ou de focalisation afin de corriger lesdites erreurs de piste et/ou de focalisation;
un moyen (11) de conversion N/A pour convertir le signal numérique correspondant à ladite valeur de commande sortant dudit moyen (8) de traitement, en un signal analogique; et

un moyen d'entraînement pour entraîner ledit actionneur (12, 13) de suivi de piste et/ou de focalisation sur la base du signal analogique converti par ledit moyen (11) de conversion N/A,

caractérisé en ce que ledit appareil comprend un moyen (9, 10) à mémoire pour stocker un ensemble d'équations de traitement de degrés différents, et ledit moyen (9, 10) à mémoire étant conçu pour modifier l'équation de traitement utilisée dans ledit moyen (8) de traitement en l'équation de traitement stockée dans ledit moyen (9, 10) à mémoire, d'un degré différent de celui de l'équation de traitement utilisée dans ledit moyen (8) de traitement en fonction de l'état de fonctionnement de l'appareil.

2. Appareil selon la revendication 1, dans lequel les équations de traitement sont une équation de traitement quadratique et une équation de traitement cubique.

3. Appareil selon la revendication 1, dans lequel ledit appareil comprend en outre un moyen (7) d'entrée de données connecté audit moyen (9, 10) à mémoire, et ledit moyen (9, 10) à mémoire est capable de réécrire les équations de traitement stockées en utilisant ledit moyen (7) d'entrée de données.

4. Appareil selon la revendication 1, dans lequel ledit moyen (9, 10) à mémoire comporte un ensemble de parties de stockage stockant chacune des équations différentes.

5. Appareil selon la revendication 1, dans lequel la modification des équations de traitement utilisées par ledit moyen (8) de traitement est appliquée sur le suivi de piste et la focalisation.

6. Appareil selon la revendication 1, dans lequel la modification des équations de traitement utilisées par ledit moyen (8) de traitement est appliquée lorsqu'un support (1) d'enregistrement ayant une réflectance différente est utilisé.

7. Appareil selon la revendication 1, dans lequel la modification des équations de traitement par ledit moyen (8) de traitement est appliquée au suivi de piste et/ou à la focalisation, et après le suivi de piste et/ou la focalisation.

8. Procédé d'enregistrement d'information optique pour enregistrer une information sur un support d'enregistrement d'information optique, ou procédé de reproduction d'information optique destiné à reproduire une information enregistrée sur un support d'enregistrement optique, ou procédé d'enregistrement et de reproduction d'information sur un, et à partir d'un, support d'enregistrement d'information optique, comprenant les étapes qui consistent:

à projeter un faisceau lumineux sur une piste souhaitée d'un support (1) d'enregistrement d'information optique;
à détecter des erreurs (3) de piste et/ou des erreurs (4) de focalisation du faisceau lumineux par rapport à ladite piste et à fournir en sortie des signaux analogiques correspondant auxdites erreurs de piste et/ou de focalisation;
à ajuster le suivi de piste et/ou la focalisation du faisceau lumineux par rapport audit support (1) d'enregistrement;
à convertir le signal analogique de sortie produit par ladite détection, en des signaux numériques;
à traiter les signaux numériques convertis sur la base d'une équation de traitement prédéterminée de façon à calculer une valeur de commande afin de corriger lesdites erreurs de piste et/ou de focalisation;
à convertir le signal numérique correspondant à la valeur de commande en un signal analogique; et
à ajuster ledit suivi de piste et/ou ladite focalisation du faisceau lumineux par rapport audit support (1) d'enregistrement sur la base du signal analogique converti,
ledit procédé étant caractérisé par les étapes supplémentaires qui consistent à stocker un ensemble d'équations de traitement de degrés différents dans un moyen (9, 10) à mémoire, à transformer l'équation de traitement utilisée dans ledit traitement en l'équation de traitement stockée dans le moyen à mémoire, afin qu'elle ait un degré différent de celui utilisé dans le traitement, en fonction de l'état de fonctionnement de l'appareil.

F I G. 1

EP 0 395 403 B1

F I G. 2

EP 0 395 403 B1

F I G. 3

F I G. 4

F I G. 5